# EUROPÄISCHE PATENTSCHRIFT

(11) **EP 2 001 218 B1**
(45) Veröffentlichungstag und Bekanntmachung des Hinweises auf die Patenterteilung: **15.12.2010**
(21) Anmeldenummer: 07011124.0
(22) Anmeldetag: 06.06.2007
(51) Int. Cl.: H04N 1/405, B41C 1/05

(54) **Verfahren zum Gravieren einer Druckform mittels Laserlicht**
Method for engraving a printing plate via laser light
Procédé destiné à graver une forme d'impression à l'aide d'une lumière laser

(43) Veröffentlichungstag der Anmeldung: 10.12.2008
(73) Patentinhaber: Weidlich, Ernst-Rudolf, Dr., 59510 Lippetal (DE)
(72) Erfinder: Weidlich, Ernst-Rudolf, Dr., 59510 Lippetal (DE)
(74) Vertreter: Niedmers, Ole

(56) Entgegenhaltungen:
- EP-A2- 0 472 049
- EP-A2- 0 593 989
- DE-A1- 2 827 596
- DE-T1- 10 084 354
- US-A- 4 131 782
- US-A1- 2002 196 310

## Beschreibung

Die Erfindung betrifft ein Verfahren zum Gravieren einer Druckform, insbesondere zum Gravieren einer Druckform für den Tiefdruck.

Ein Verfahren zum Gravieren einer Druckform ist aus der US-A-4 131 782 bekannt. In diesem Dokument ist dargelegt, daß man zur Vermeidung eines Moiré-Effektes und einer Farbverschiebung die Ausbildung von Näpfchen, die Druckfarbe aufnehmen und Druckfarbe abgeben, z.B. bei der Drehung einer Druckwalze bei einer Bebilderung, abweichend von der Bebilderung in einem von der normalen Schraubenbewegung bei der Bebilderung auftretenden Winkel ausführt. Die Bebilderung soll in einem sägezahnförmig gesteuerten Bebilderungsmodus auf der Oberfläche der Druckform ausgebildet bzw. ausgeführt werden. Die Summe aller Spitzen eines Sägezahns und ebenso die Summe aller Täler eines Sägezahns ergeben, wenn dort jeweils Bild- bzw. Rasterpunkte bei Vertiefungen bzw. Näpfchen bei der Bebilderung ausgebildet werden, wiederum eine im Winkel von 90° relativ zur Drehachse der Druckform liegende Bewegungsrichtung der Druckform. Eine fortwährende Neigung aller Rasterpunkte bei einer Bebilderung ist nicht möglich.

Die Tiefdrucktechnik und die Hochdrucktechnik sind seit langem eingeführte Drucktechniken, wobei insbesondere die Tiefdrucktechnik für die Erzeugung höherwertiger Druckprodukte in aller Welt eingesetzt wird. Die Tiefdrucktechnik als solche ist somit der Fachwelt in allen Einzelheiten bestens bekannt, so daß hier in bezug auf den Aufbau einer in der Tiefdrucktechnik verwendeten Druckwalze nur insoweit eingegangen wird, wie dieses zum Verständnis der hier beschriebenen Erfindung erforderlich ist.

In der Druckwalze werden entsprechend dem vorgegebenen Bild und/oder dem vorgegebenen Strich und/oder den vorgegebenen Zahlen und Buchstaben, die nach Abschluß des Drucks auf dem Druckerzeugnis erscheinen sollen, zuvor elektronisch Datensätze von Bebilderungsinformationen erzeugt, die auf der Oberfläche der Druckform in entsprechende Farbaufnahme- bzw. Farbabgabe-Rasterpunkte, die als Vertiefungen ausgebildet werden, entsprechend dem vorgegebenen Schema der Bebilderungsinformationen umgesetzt werden. Man spricht beim Tiefdruck von sog. "Näpfchen", die auf der Oberfläche der Druckform ausgebildet werden, in die nach Abschluß eines Bebilderungsvorganges der Druckform im Zuge der Herstellung eines Druckerzeugnisses Druckfarbe eingegeben und dort gehalten wird und am eigentlichen Druckort dann wieder auf das Druckerzeugnis abgegeben wird.

Die Ausbildung der Näpfchen auf der Druckform geschieht auch heutzutage noch weitgehend auf elektromechanische Weise, d.h. ein mit einem Diamanten als Schneidorgan besetzter Stichel veranlaßt, entsprechend der Bebilderungsinformation gesteuert, eine spanabhebende Verformung der Oberfläche der Druckwalze, so daß im Zuge der Bewegung des mechanisch bewegten Stichels eine Vertiefung in der Oberfläche der Druckform gebildet wird. Diese Vertiefung bzw. dieses Näpfchen nimmt dann die Druckfarbe auf und gibt sie, wie schon ausgeführt, am Druckort wieder ab.

Ein mechanisch betätigter Stichel kann in Abhängigkeit der Abmessungen des eigentlichen Schneidwerkzeuges des Stichels, d.h. in Abhängigkeit der Maße und des Schliffs eines Diamanten, nur ein Näpfchen erzeugen, das im Hinblick auf die Ausdehnung des Näpfchens im Bereich der Oberfläche der Druckform starr an die Tiefe des Näpfchens gekoppelt ist. Je tiefer das Näpfchen gewünscht wird, je breiter ist in der Ebene der Oberfläche der Druckform die Öffnung des Näpfchens und umgekehrt.

Obwohl die Gravur mittels derartiger mechanischer Stichel an sich schon zu sehr hohen Druckgüten führt, hat die vorbeschriebene mechanische Gravur doch einige Nachteile, die aus dem vorangehend Gesagten auch sofort erkennbar sind. Durch die unauflösbare Kopplung der Tiefe an die Breite eines Näpfchens und umgekehrt kann eine weitere Verbesserung der Güte eines Drucks in Randbereichen beim Übergang von einer Farbe zur anderen Farbe, bspw. beim Mehrfarbendruck, aber auch der Kontrast zwischen hell und dunkel (Licht, Halbton, schwarz) nur unzureichend beeinflußt werden, da mit dem mechanisch erzeugten Näpfchenvolumen auch immer das Farbaufnahme- und Farbabgabevermögen bzw. -verhalten des Näpfchens einhergeht.

Es hat sich deshalb seit ca. 1 ½ Jahrzehnten ein weiteres Gravierverfahren zunehmend etabliert, bei dem die Näpfchen nicht mittels einer mechanischen, spanabhebenden Bearbeitung erzeugt werden, sondern mittels Laserlicht, das zur Bebilderung der Oberfläche einer Druckform auf die Oberfläche gerichtet wird. Näpfchen dadurch erzeugt werden, daß durch das auftreffende Laserlicht der Oberflächenwerkstoff der Druckform verdampft wird. Prinzipiell ist es mit der sog. Lasergravur möglich, den Durchmesser bzw. die Breite eines Näpfchens von der Ausbildung der Tiefe eines Näpfchens zu entkoppeln. Mit den heutzutage zur Verfügung stehenden Lasereinrichtungen (Hochleistungslaserdioden) und nachgeschalteten Pumpeinrichtungen (Laserfiber) zur Erhöhung der Laserenergie und wiederum nachgeschalteten optischen Einrichtungen ist es möglich, auf kleinstem Raum in der Nähe der Oberfläche der zu bebildernden Druckform ein Bündel von Laserstrahlen hoher Energie und feinfokussiert auftreten zu lassen, um besagte Näpfchen durch geeignete Steuerung der Lasereinrichtungen zu erzeugen.

Der technische Trend geht dahin, daß die elektromechanische Ausbildung der Näpfchen mittels diamantbestückten Sticheln durch die Lasergravur in Zukunft immer stärker zurückgedrängt wird.

Genau wie die elektromechanische Gravur hat die Lasergravur den Nachteil, daß die Druckerzeugnisse, die mittels einer durch Lasergravur bebilderten Druckwalze hergestellt werden, aufgrund des bei beiden Bebilderungsverfahren benutzen Rasterprinzips bzw. Rasterverfahrens, d.h. der Anordnung der einzelnen Rasterpunkte bzw. Näpfchen zueinander, beim Übereinanderdrucken bspw. von vier Grundfarben für die Ausführung eines Vierfarbendruckprozesses, d.h. beim fertigen Druck, Interferenzen zeigen, das sog. Moiré, die den Bildeindruck erheblich stören können und somit für die Erzeugung höchstwertiger Druckprodukte nur bedingt geeignet sind.

Eigentliche Ursache der Ausbildung des Moire ist die starre Bebilderungstechnik mit elektromechanischen Sticheln, da die elektromechanischen Stichel sich bei der Bebilderung nur auf die Oberfläche der Druckform hin bewegen können, wobei gleichzeitig die Druckwalze eine Rotationsbewegung um die Walzenachse ausführt, d.h. das Näpfchen wird quasi in Umfangsrichtung durch spanendes Ausräumen der Oberfläche mittels des Diamanten in Drehrichtung erzeugt. Somit ist die Richtung des Rasters aller Rasterpunkte immer 90° zur Richtung der Achse der Druckwalze ausgebildet, oder, wenn man so will, parallel, d.h. 0°, zur Drehrichtung der Druckwalze.

Diese Rasterungstechnik wird auch bei der Lasergravur analog der elektromechanischen Gravur angewendet, d.h. auch die mittels Laserlicht erzeugten Näpfchen sind im Hinblick auf ihre Rasterung parallel zur Drehrichtung bzw. in einem rechten Winkel zur Drehachse der Druckform ausgerichtet.

Die Folge ist, daß auch die mittels der Lasergravur bebilderten Druckwalzen auf dem damit hergestellten Druckerzeugnis zu Moiré-Strukturen führen, die im Hinblick auf dieses Problem keinerlei Verbesserungen gegenüber der elektromechanischen Gravur zeigen.

Es ist somit Aufgabe der vorliegenden Erfindung ein Verfahren zu schaffen, mit dem Druckformen bebildert werden können, bei deren Anwendung zur Ausbildung eines Druckerzeugnisses auf dem Druckerzeugnis keinerlei Moiré-Erscheinungen auftreten, wobei ansonsten die Grundtechniken der Bebilderung von Druckformen mittels elektromechanischer Gravierorgane weitgehend beibehalten werden können und Druckerzeugnisse hergestellt werden können, die allerhöchsten Ansprüchen genügen, und wobei das Bebilderungsverfahren zudem mit hoher Präzision und kostengünstig durchgeführt werden kann und dabei Verschleißteile im Zuge der Bebilderung der Druckwalze faktisch nicht anfallen.

Gelöst wird die Aufgabe gem. der Erfindung durch ein Verfahren zum Gravieren einer Druckform, insbesondere zum Gravieren einer Druckform für den Tiefdruck, wobei die auf der Druckform in einem vorgegebenen Raster zu gravierenden Farbaufnahme- und Farbabgabe-Näpfchen, die in ihrer Gesamtheit pro Druckform vorgegebenen Bebilderungsinformationen entsprechen, mittels Laserlicht erzeugt werden, und wobei das Raster in einem spitzen Winkel α relativ zur Dreh- oder Linearbewegung der Druckform bei der Erzeugung von Rasterpunkten geneigt ist und durch eine Mehrzahl von Rasterpunkten eine Rasterzelle gebildet wird, und daß in den Rasterzellen jeweils eine Mehrzahl von Rasternäpfchen vorhanden ist.

Es ist herausgefunden worden, daß bspw. bei einem klassischen Vierfarbdruck, bei dem also zum Erhalt eines fertigen Druckerzeugnisses das Druckerzeugnis von vier unterschiedlich bebilderten und mit unterschiedlicher Druckfarbe beaufschlagten Druckformen beaufschlagt wird, und unterschiedliche Winkel α der Rasterung bei unterschiedlichen Farben verwendet werden, diese erfindungsgemäße Maßnahme zur Ausschaltung der Moiré-Bildung geführt hat.

Vorteilhafterweise kann der Rasterwinkel α aber auch in Abhängigkeit der Bebilderungsinformationen als solchen unterschiedlich gewählt werden, denn auch die Bebilderungsinformation als solche geht in die Moiré-Bildungswahrscheinlichkeit ein. So sind bspw. Winkel β der Rasterung zwischen der Drehachse der Druckwalze (90° - α = β) von 7,5°, 15°, 22,5°, 30°, 37,5°, 45°, 52,5° und 60° möglich, die in Abhängigkeit der Bebilderungsinformationen und der Druckfarbe gewählt werden können.

Vorteilhafterweise kann auch die Form des Rasters in Abhängigkeit der Bebilderungsinformationen ausgewählt werden, und zwar in Abhängigkeit der unterschiedlichen Näpfchen oder Teilnäpfchen, die innerhalb einer Rasterzelle ausgebildet werden sollen, und in Abhängigkeit der Tonstufungen der Rasterpunkte bzw. Teilrasterpunkte (Schwarz, Halbton, Licht) innerhalb einer Rasterzelle.

Die Form des Rasters kann vorzugsweise ein Quadrat und/oder ein Rechteck und/oder ein Parallelogramm sein, wobei es auch möglich ist, das Raster vorteilhafterweise als Sechseck auszubilden.

Gem, einer vorteilhaften Ausgestaltung des Verfahrens werden die Rasterpunkte bei einem Bebilderungsvorgang einer Druckform auf vorbestimmten Flächen der Druckform wenigstens teilweise nach der Methode der AM-Rasterung und auf anderen vorbestimmten Flächen der Druckform wenigstens teilweise nach der Methode der FM-Rasterung ausgeführt. Der drucktechnischen Fachwelt ist die Ausbildung der Amplitudenmodulationsrasterung, kurz AM-Rasterung, man spricht auch von konventioneller Rasterung, bekannt, genau wie die Rasterung nach der Methode der Frequenzmodulation, kurz FM-Rasterung. Allgemein gilt, daß bei gleicher kleinster Punktgröße im Druck mit der FM-Rasterung eine bessere Detailwiedergabe möglich, ist im Vergleich zur AM-Rasterung. Gleichwohl schließen sich AM-Rasterung und FM-Rasterung keineswegs aus, denn beide Verfahren haben für die bestimmte Wiedergabe von Bildinformationen bestimmte Vorteile gegenüber jeweils der anderen Rasterung. Bei einer Rasterung nach der Methode der Amplitudenmodulation wird eine sehr gute sog. Überspülung erreicht, was zu einer guten Wiedergabe im lichten Bereich von Rasterpunkten führt, man spricht bei der amplitudenmodulierten Rasterung auch von einer autotypischen Rasterung, wohingegen mit der Frequenzmodulationsmethode eine Rasterung erreicht wird, die eine sehr hohe Enddruckdichte hat, aber eine nicht so gute Wiedergabe von Übergängen im Bereich der Halbtöne aufweist.

Die vorangehend beschriebene Erkenntnis wird sich zugute gemacht bei einer noch anderen vorteilhaften Verfahrensführung, bei der nämlich bei einem Bebilderungsvorgang einer Druckform wenigstens eine vorbestimmte Fläche der Druckform sowohl nach der Methode der AM-Rasterung als auch nach der Methode der FM-Rasterung bebildert wird. Man spricht in diesem Zusammenhang, bei dem sowohl ein bestimmter Bereich bzw. eine bestimmte Fläche der Druckform sowohl nach der Methode der AM-Rasterung als auch nach der Methode der FM-Rasterung bebildert wird, d.h. Näpfchen in der Oberfläche mittels laserlicht erzeugt werden, von einer halbautotypischen Rasterung. Die unterschiedliche Wahl der Herstellungsmethoden der Rasterung sind darüber hinaus auch von anderen Parametern als der Form der Näpfchen abhängig, bspw. auch von den Eigenschaften der verwendeten Druckfarbe, dem zu bedrukkenden Stoff im Sinne des gewünschten Druckerzeugnisses und dem Druckprozess selbst.

So ist es bspw. ebenfalls vorteilhaft, einen Vollton eines Rasterpunktes mit einem Tonwert von 100 bis 80 % mittels der AM-Rasterung zu bebildern und vorzugsweise einen Ton eines Rasterpunktes mit einem Tonwert von 80 bis 40 % sowohl mittels der AM-Rasterung als auch mittels der FM-Rasterung zu bebildern und/oder einen Ton eines Rasterpunktes vorzugsweise mit einem Tonwert von 40 bis 0 % mittels einer FM-Rasterung zu bebildern.

Wie eingangs im Zusammenhang mit der Schilderung der elektromechanischen Gravur mittels diamantbestücktem Gravierstichel beschrieben, ist damit lediglich ein Rasterpunkt erzeugbar, der eine an die Breite bzw. den Durchmesser des Näpfchens zwangsweise gekoppelte Tiefe aufweist und umgekehrt. Es ist also mittels der bekannten Methode nicht möglich, bspw. in einer Rasterzelle eine Mehrzahl von Rasterpunkten zu erzeugen, die bei gleichem Durchmesser unterschiedliche Tiefen aufweisen und die bei gleichen Tiefen unterschiedliche Durchmesser aufweisen. Mittels dem hier vorgestellten erfindungsgemäßen Verfahren ist es vorteilhafterweise möglich, in einer Rasterzelle eine Mehrzahl unterschiedlich großer Rasterpunkte beim Bebilderungsvorgang mittels des Laserlichts auszubilden, wodurch es möglich ist, die Tendenz zu einer Moiré-Bildung beim Mehrfarbdruck noch weiter zu minimieren und noch zu einer sehr viel feineren Darstellung eines Bildes, eines Buchstabens oder einer Zahl bzw. eines Striches zu gelangen.

So ist es bspw. äußerst vorteilhaft, die zu den Rändern der Rasterzelle hin gelegenen Rasterpunkte kleiner als die zur Mitte der Rasterzelle hin gelegenen auszubilden, um insbesondere die Konturen im Halbtonbereich von Bildern noch schärfer auszubilden.

Die Energie des Laserlichts am Ort des Auftreffens des Laserlichts auf dem Oberflächenwerkstoff der Druckform ist ein sehr wichtiger Parameter für die Ausbildung der Näpfchenränder in der Oberfläche der Druckform, der Näpfchentiefe und auch der lichten Öffnung der Näpfchen in der Oberfläche der Druckform, in der die Näpfchen ausgebildet werden. Wenn im nachfolgenden von der Ausbildung der Rasterpunkte in einer Rasterzelle gesprochen wird, sind immer die Näpfchen, die die Rasterpunkte bilden, gemeint. Ein Rasterpunkt kann mittels dem Laserlicht aus einer Mehrzahl einzelner Teilnäpfchen bzw. einzelner Teilrasterpunkte gebildet werden, ein Rasterpunkt kann aber auch durch eine einzige Beaufschlagung mittels Laserlicht erzeugt werden. Das hängt von der gewählten Energie des Laserlichts ab, von der Fokussierung des Laserlichts auf der Oberfläche der Druckform und letztlich auch von der Zeit, in der das Laserlicht zur Ausbildung eines Näpfchens auf die Oberfläche einwirkt.

In einer vorteilhaften weiteren Ausgestaltung des Verfahrens wird in einer Verfahrensgrundform die Bebilderung der Druckform zur Ausbildung der Rasterpunkte der Rasterzellen mit gleicher Energie des Laserlichts pro Rasterpunkt oder Teilrasterpunkt ausgeführt. Die so gebildeten Rasterpunkte bzw. Näpfchen weisen somit regelmäßig gleiche Näpfchendurchmesser und gleiche Näpfchentiefen auf, unter der Voraussetzung, daß die Zeit, die das Laserlicht auf die Oberfläche der Druckform einwirkt, immer gleich ist.

Das Verfahren kann vorzugsweise dadurch modifiziert werden, daß die Bebilderung der Druckform zur Ausbildung der Rasterpunkte der Rasterzellen mit unterschiedlicher Energie des Rasterlichts pro Rasterpunkt oder Teilrasterpunkt ausgeführt wird. So können bspw. in einer Rasterzelle eine Mehrzahl unterschiedlich tiefer und/oder unterschiedlich im Öffnungsdurchmesser, d.h. unterschiedlich breiter Rasterpunkte bzw. Näpfchen, erzeugt werden, d.h., um bei einem Beispiel zu bleiben, im Randbereich einer Rasterzelle Näpfchen mit kleinem Öffnungsdurchmesser ausgebildet werden, die aber dennoch eine ausreichende Tiefe zur Aufnahme und Abgabe der Druckfarbe haben, wohingegen bspw. die übrigen Bereiche einer Rasterzelle Rasterpunkte bzw. Näpfchen mit großem Näpfchendurchmesser mit geeignet großer Druckfarbaufnahme- bzw. Druckfarbabgabekapazität aufweisen.

Die Gesamtzahl der somit pro Rasterzelle ausbildbaren Rasterpunkte bzw. Näpfchen erlaubt eine sehr viel bessere Detailwiedergabe bzw. eine Detailkonturierung des fertigen Druckbildes als es bisherige Verfahren ermöglichen.

Bei der Methode der frequenzmodulierten Rasterung (FM-Rasterung) ist es bekannt, pro Rasterzelle die einzelnen Rasterpunkte bei allen Tonwerten pro Rasterzelle die Rasterpunkte symmetrisch in der Rasterzelle zu verteilen, d.h. theoretisch dadurch homogene Töne in Abhängigkeit der Tonwerte zu erzeugen. Auch diese Halbtonreproduktion mit unterschiedlicher Anzahl von Rasterpunkten gleicher Größe innerhalb einer jeweiligen Rasterzelle hat nicht zu einer moiréfreien Wiedergabe im Druck geführt, so daß die Methode der FM-Rasterung verfeinert wurde, indem pro Rasterzelle die unterschiedliche Anzahl von Rasterpunkten gleicher Größe zur Darstellung von Halbtönen unterschiedlicher Tonwerte dadurch vorgenommen wurde, daß man pro Rasterzelle die Rasterpunkte bzw. Näpfchen stochastisch verteilte. Abgesehen davon, daß das bei einer AM-Rasterung gar nicht möglich ist, hat diese Art der Verteilung der Rasterpunkte bzw. Näpfchen pro Rasterzelle immer noch nicht zu einem moiréfreien Druckergebnis geführt.

Erst mittels der erfindungsgemäßen Verfahrensführung ist dieses, wie vorangehend beschrieben, wirklich möglich geworden, wobei das Verfahren vorteilhafterweise dahingehend weiterentwickelt worden ist, daß die Rasterpunkte oder Teilrasterpunkte zu den Rändern der Rasterzelle hin mit geringerer Energie des Laserlichts erzeugt werden als die zum Zentrum der Rasterzellen hin erzeugten Rasterpunkte oder Teilrasterpunkte, wodurch die Moiréanfälligkeit nochmals verringert wird und die Ausbildung der Ränder beim Druck verbessert wird.

Wie oben schon angedeutet, ist es möglich, mittels dem erfindungsgemäßen Verfahren einen jeweiligen Rasterpunkt oder einen jeweiligen Teilrasterpunkt in bezug auf seine Öffnungsweite und Tiefe im Zuge eines Beaufschlagungsvorganges der Oberfläche der Druckform mittels Laserlicht zu erzeugen. Man spricht in der Bebilderungstechnik von Druckformen auch von der Ausbildung eines Rasterpunktes oder eines Teilrasterpunktes durch einen "Schuß", d.h. einer Beaufschlagung mittels Laserlicht ein bestimmtes Zeitintervall lang (one shot). Es hat sich aber als vorteilhaft herausgestellt, das Verfahren dahingehend zu modifizieren, daß ein Rasterpunkt oder ein Teilrasterpunkt mittels einer Mehrzahl von jeweiligen Laserlichtbeaufschlagungszeitintervallen erzeugt wird, d.h. daß die Rasterpunkte bzw. die Teilrasterpunkte bei der Bebilderung der Oberfläche einer Druckform mehrfach durchlaufen werden, d.h. mehrere "Laserlichtschüsse" auf den Rasterpunkt bzw. das Näpfchen abgegeben werden, bis dieses seine endgültige Form in bezug auf Rasterpunktöffnung bzw. Näpfchenöffnung und Rasterpunkttiefe bzw. Näpfchentiefe erreicht hat.

Mehrzahl im vorangehend beschriebenen Sinne bedeutet auch, daß der Laserstrahl bei der Mehrzahl der Durchgänge zur Ausbildung der endgültigen gewünschten Form des Rasterpunktes bzw. des Näpfchens im Zuge der Durchgänge nicht immer wieder streng auf den gleichen gedachten Punkt des Rasterpunktes bzw. des Näpfchens gerichtet wird, sondern nach Art eines mechanischen Räumens, ausgehend von einem gedachten Mittelpunkt des Näpfchens, zu den benachbarten Seiten versetzt auf das Näpfchen bzw. den Rasterpunkt gerichtet wird, so daß dieser dadurch seine endgültige Öffnungsweite, die durch die Bebilderungsinformationen vorgegeben ist, erreicht.

In Abhängigkeit der jeweils gewünschten Öffnungsgröße und/oder der Tiefe des Rasterpunktes bzw. der Teilrasterpunkte bzw. der Näpfchen bzw. der Teilnäpfchen ist das Laserlichtbeaufschlagungszeitintervall einstellbar und vorwählbar und wird durch die entsprechenden Bebilderungsparameter vorgegeben. Gleiches gilt auch vorteilhafterweise für die Laserlichtenergie, die vorzugsweise einstellbar und vorwählbar ist, wobei diese zudem auch in Abhängigkeit des Werkstoffs der Oberfläche der Druckform gewählt wird, und wobei die Energie des Laserlichts am Ort der Beaufschlagung der Druckform, d.h. an dessen Oberfläche, auch wiederum auf den Werkstoff der Druckform abstimmbar ist.

Ein erklärtes Ziel der Bebilderung einer Druckform mittels Laserlicht gem. dem hier vorgestellten Verfahren ist es, eine Nachbearbeitung der Druckform nach der Ausführung der Bebilderung so gering wie möglich zu halten. Bei der Herstellung von Rasterpunkten bzw. Näpfchen mittels dem elektromechanischen Verfahren mit diamantbestücktem Stichel ist nach Ausbildung des jeweiligen Näpfchens im Randbereich jedes Näpfchens ein Grat aus dem Werkstoff der Druckform ausgebildet, wobei dieser Grat durch eine Entgratungsvorrichtung, die nach Art eines Schabers wirkt, entfernt wird. Je länger der diamantbestückte Stichel im Einsatz ist, je größer wird der Grat infolge des zunehmend Unscharfwerdens des Diamanten.

Auch bei der Ausbildung von Rasterpunkten bzw. Näpfchen mittels dem erfindungsgemäßen Verfahren entstehen um die Öffnung des Rasterpunktes bzw. des Näpfchens gratähnliche Strukturen, die einerseits durch den infolge der Laserlichtbeaufschlagung angeschmolzenen Werkstoff entstehen und durch den Niederschlag bzw. die Kondensation des verdampften Werkstoffs auf der Oberfläche der Druckform im Bereich der Näpfchenränder. Auch diese gratähnlichen Strukturen um die Öffnung des Rasterpunktes herum müssen nach Abschluß der Bebilderung entfernt werden, was ebenfalls mittels einer schaberähnlichen Einrichtung geschieht. Man hat versucht, durch entsprechende Absaugeinrichtungen am Ort der Ausbildung des Rasterpunktes bzw. des Näpfchens den im Zuge der Ausbildung des Näpfchens verdampften Werkstoff vom Ort der Ausbildung des Näpfchens so zu entfernen, daß sich kein Niederschlag auf den benachbarten Bereichen der Näpfchenöffnung festsetzt, dieses ist aber technisch sehr aufwendig und bisher auch nicht zur wirklichen Zufriedenheit gelungen.

Es wird deshalb auch zur Behebung dieses Mangels bei einer noch anderen vorteilhaften Verfahrensführung vorgeschlagen, daß ein Rasterpunkt oder ein Teilrasterpunkt zunächst mittels geringer Energie des Laserlichts erzeugt wird, daß der gebildete Rasterpunkt oder gebildete Teilrasterpunkt nachfolgend mit einer maximalen Energie des Laserlichts beaufschlagt wird und daß nachfolgend schließlich der gebildete Rasterpunkt oder der gebildete Teilrasterpunkt wiederum mit geringerer Energie des Laserlichts beaufschlagt wird.

Der Vorteil dieser Verfahrensführung ist der, daß zunächst der Werkstoff in dem ersten Verfahrensschritt bis kurz unter der Verdampfungstemperatur des Werkstoffs der Druckform erwärmt wird, d.h. geeignet temperiert wird, daß nachfolgend bei der Beaufschlagung des Rasterpunktes mit hoher Energie die Verdampfung behutsam eingeleitet und durchgeführt wird, ohne daß es zu Aufwerfungen im Randbereich des Rasterpunktes bzw. des Näpfchens kommt, und daß nachfolgend wiederum mit geringerer Energie der Rasterpunkt bzw. das Näpfchen beaufschlagt wird, wobei im letzten Verfahrensschritt keine Verdampfung des Werkstoffs erfolgt, aber die Umgebung doch auf einer solchen Temperatur gehalten wird, daß keine Kondensation des verdampften Werkstoffs im Bereich des Randes der Öffnung des Rasterpunktes bzw. des Näpfchens erfolgen kann, vielmehr, soweit erforderlich, abgesaugt werden kann und schließlich der Werkstoff sich behutsam abkühlen kann. Geringe Reste des Werkstoffs in der Umgebung der Öffnung der Rasterpunkte bzw. der Näpfchen können dann leicht mit einem Schaber entfernt werden.

Die Erfindung wird nun unter Bezugnahme auf die nachfolgenden Zeichnungen anhand mehrerer Ausgestaltungen der Erfindung beschrieben. Darin zeigen:
- Fig. 1 a. - c.: schematisch das Rasterverfahren nach dem Prin- zip der Amplitudenmodulation (konventionelle Ras- terung) und das Rasterverfahren nach dem Prin- zip der Frequenzmodulation mit symmetrischer und stochastischer Verteilung der Rasterpunkte,
- Fig. 2 und Fig. 3: eine Anzahl von Rasterzellen mit quadratischem Raster, um jeweils unterschiedliche Winkel 1 β gedreht,
- Fig. 4: eine Mehrzahl von sechseckig ausgebildeten Ra- sterzellen, wobei das Raster der Rasterzellen in seiner Gesamtheit um einen Winkel β gedreht ist,
- Fig. 5: eine quadratische Rasterzelle, die um einen Win- kel β gedreht ist, mit einer Mehrzahl im wesent- lichen gleich großer Rasterpunkte bzw. Näpfchen,
- Fig. 6: eine Darstellung gem. Fig. 5, bei der jedoch die Rasterzelle in Form eines Rhombus ausgebildet ist,
- Fig. 7: eine Rasterzelle, die um einen Winkel β gedreht ist, mit einer Mehrzahl von Rasterpunkten bzw. Näpfchen unterschiedlichem Öffnungsdurchmessers.
- Fig. 8: in der Seitenansicht einen Ausschnitt im schema- tischen Schnitt zwei fertig ausgebildete Näpf- chen, die aus einer Mehrzahl einzelner Teilnäpf- chen erzeugt worden sind,
- Fig. 9: in der Seitenansicht einen Ausschnitt im schemati- schen Schnitt in vergrößerter Darstellung ein fer- tiges Näpfchen sowie schematische dargestellte un- terschiedliche Näpfchen im Querschnitt zeigend und
- Fig. 10: eine Darstellung entsprechend der Darstellung von Fig. 8, bei der die Randbereiche zweier be- nachbarter, aus mehreren Teilnäpfchen herge- stellter Gesamtnäpfchen bei unterschiedlichen Laserlichtenergien dargestellt sind.

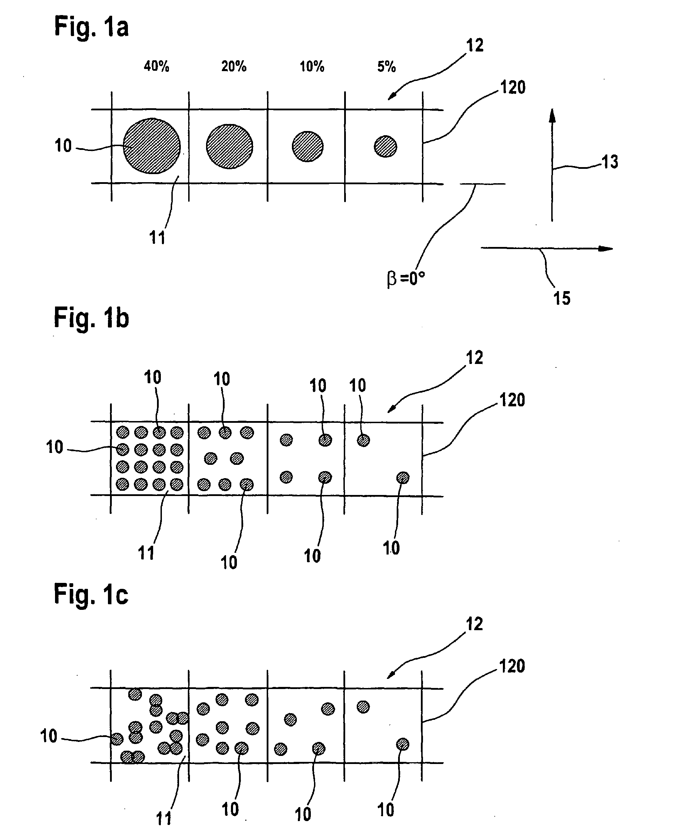

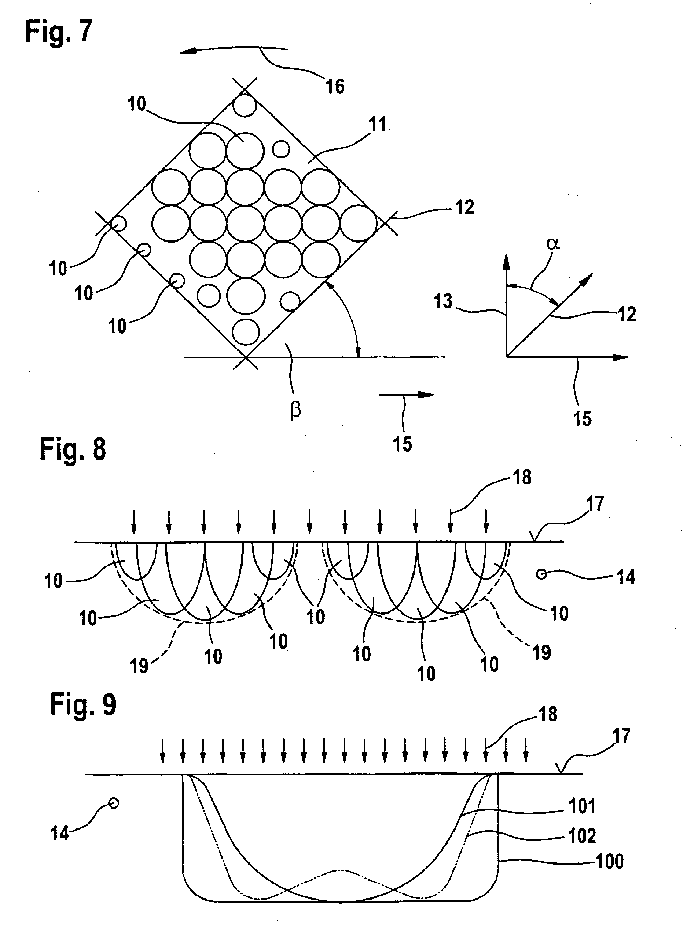

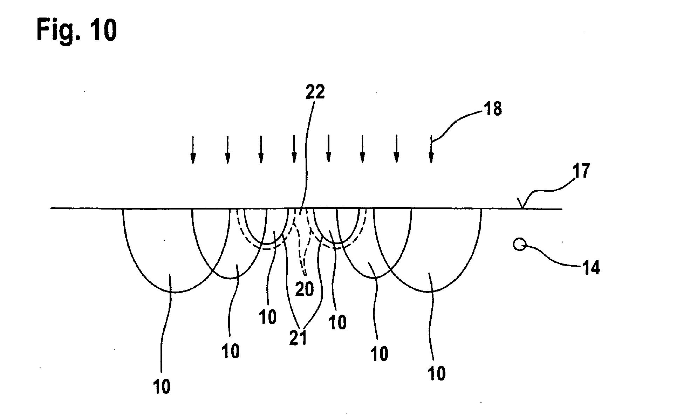

Es wird zunächst Bezug genommen auf die Darstellung der Fig. 1. Bei der konventionellen Bebilderung von Druckformen 14, die für den Tiefdruck verwendet werden (mit gewissen Einschränkungen auch prinzipiell für den Hochdruck) erfolgt die Bebilderung der Druckform 14 mittels Laserlicht 18, vgl. auch die Fig. 8 und 10, dadurch, daß entsprechend der Bildinformation Rasterpunkte 10 bzw. Näpfchen bzw. Teilnäpfchen erzeugt werden, und zwar entsprechend den jeweiligen Tonwerten der Bild- bzw. Bebilderungsinformation zwischen 100 % (Schwarz) und 0 % (Licht) und den dazwischen liegenden Tönen (Halbtönen).

Dieses ist schematisch in Fig. 1 a. dargestellt. Man spricht hier von einer Bebilderung einer Druckform 14 nach der Methode der Amplitudenmodulation bzw. kurz von AM-Rasterung. Alle Rasterzellen 11 haben dabei prinzipiell gleiche Größen bzw. Abmessungen. Alle Rasterzellen sind dabei in einem vorher festgelegten Rasterschema, man spricht kurz von Raster 12, angeordnet, wobei die Art und Größe des Rasters 12 in die Bebilderungsinformation implementiert ist.

Die Fig. 1 b. und 1 c. stellen schematisch das Rasterverfahren nach der Methode der Frequenzmodulation dar, auch kurz FM-Rasterung genannt, das sich von dem AM-Rasterungsverfahren gem. Fig. 1 a. dadurch unterscheidet, daß ein Rasterpunkt 10 gem. einem Tonwert in einer Mehrzahl von Rasterpunkten 10 aufgeteilt und über die Rasterzelle 11 verteilt wird. Die Verteilung der einzelnen Rasterpunkte 10 gem. den jeweiligen Tonwerten, die in einer Rasterzelle 11 dargestellt werden sollen, ist zwischen den Fig. 1 b. und 1 c. unterschiedlich. Die Anordnung der einzelnen Rasterpunkte 10 in Fig. 1 b. ist entsprechend dem gewünschten Tonwert pro Rasterzelle 11 symmetrisch, wohingegen die Anordnung der Rasterpunkte 10 gem. Fig. 1 c. von einer stochastischen Verteilung der Rasterpunkte 10 ausgeht. Die stochastische Verteilung der Rasterpunkte 10 gem. Fig. 1 c. führt gegenüber der symmetrischen Verteilung der Rasterpunkte 10 gem. Fig. 1 b. zu präzisieren Druckergebnissen.

Sowohl für die AM-Rasterung als auch die FM-Rasterung gem. den schematischen Darstellungen der Fig. 1 a. bis 1 c. gilt, daß die Hauptachsen des Rasters 12, in den Fig. 1 a. bis 1 c. waagerecht dargestellt, auf der Drehachse 15 einer Druckform 14 liegen bzw. unter einem Winkel von α = 0° ausgerichtet sind. Es sei dazu angemerkt, daß als Hauptbezugsachse nicht notwendigerweise die in den Fig. 1 a. bis 1 c. waagerecht liegende Achse das Raster 12 bestimmen muß, vielmehr wäre es auch möglich, die in den Fig. 1 a. bis 1 c. dargestellte senkrechte Achse als Bezugsachse, d.h. Rasterachse 120, zu bestimmen. Für die nachfolgende Beschreibung der Erfindung sei aber die waagerecht liegende Achse des Rasters 12 die Bezugsachse.

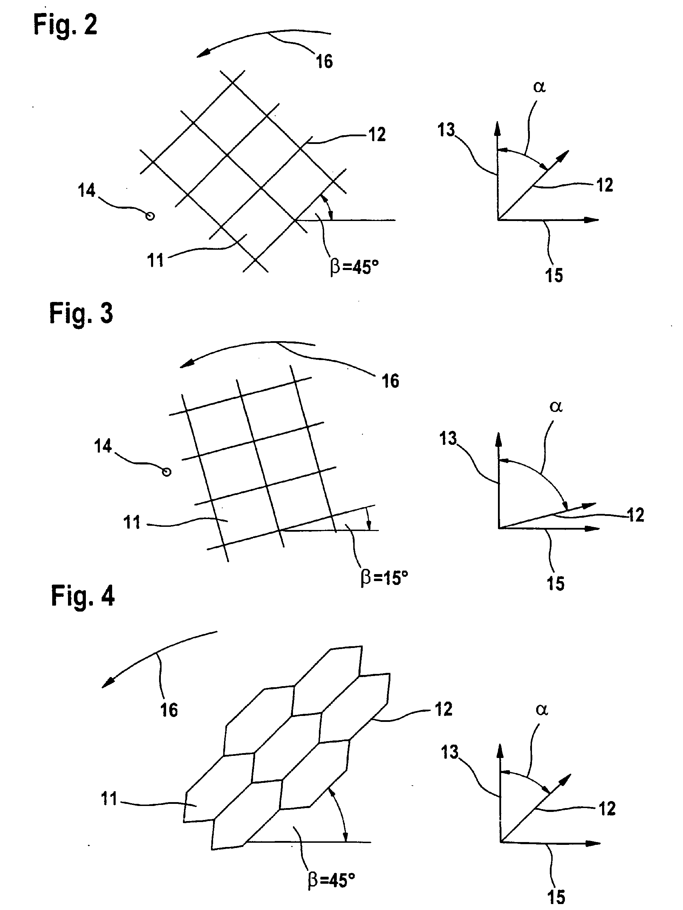

Die Fig. 2 bis 4 zeigen das Grundschema der Erfindung. Es ist ersichtlich, daß das Raster 12 in einem spitzen Winkel α relativ zur Dreh- oder Linearbewegung der Druckform 14 bzw. um den entsprechenden Komplementwinkel β relativ zur Drehachse 15 der Druckform 14 bei der Erzeugung der Rasterpunkte 10, in den Fig. 2 bis 4 nicht dargestellt, gedreht ist. Die Drehung wird durch den Pfeil 16 symbolisiert, der die Drehrichtung des Rasters 12 zeigt. In Fig. 4 ist ein Raster 12 gezeigt, bei dem die einzelnen Rasterzellen 11 aus sechseckigen Zellen nach Art einer Wabe bestehen. Letztlich sind aber alle geeigneten Zellenstrukturen denkbar.

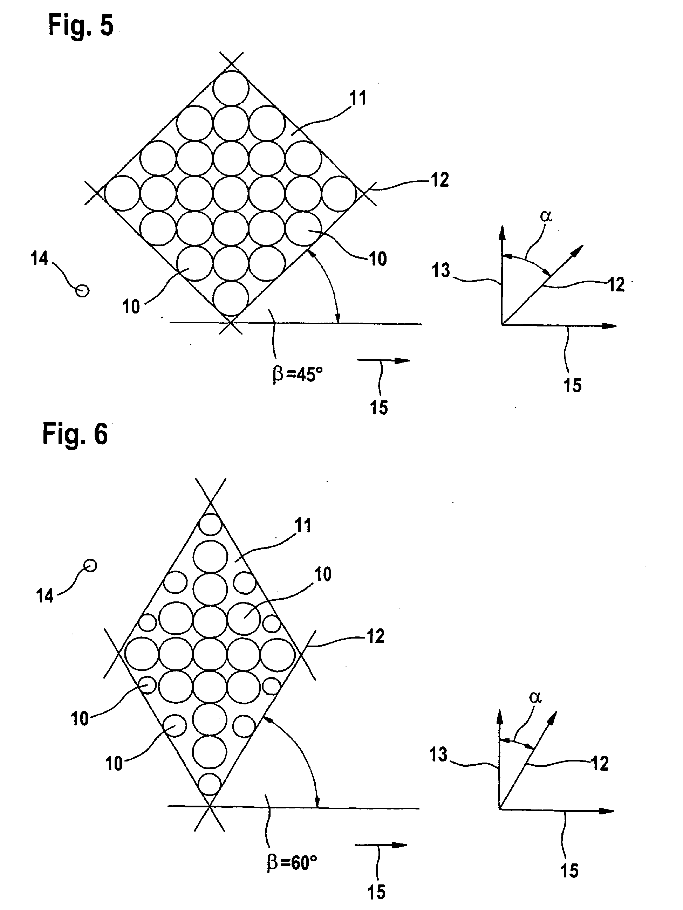

In Fig. 5 ist eine Rasterzelle 11 dargestellt, in der eine Vielzahl von Rasterpunkten 10 bzw. Näpfchen ausgebildet sind, wobei hier die Rasterpunkte alle dieselbe Öffnungsgröße aufweisen.

Aus den Darstellungen der jeweils einen Rasterzelle 11 in den Fig. 6 und 7 ist erkennbar, daß dort eine Mehrzahl von Rasterpunkten 10 pro Rasterzelle 11 ausgebildet ist und in den jeweiligen Randbereichen der Rasterzelle 11 ausgebildete Rasterpunkte 10 einen kleineren Öffnungsdurchmesser aufweisen als die zur jeweiligen Mitte der Rasterzelle 11 gelegenen Rasterpunkte 10.

Für alle vorangehend beschriebenen und dargestellten Rasterzellen 11 bzw. Rasterungen schlechthin gilt, daß der Rasterwinkel in Abhängigkeit der Informationen, die die Grundlage der Bebilderung der Druckform 14 in Form von Rasterpunkten bzw. Näpfchen 10 bilden, wählbar ist, was im übrigen auch für die Form des Rasters 12 selbst gilt.

Grundsätzlich gilt, s. Fig. 9, daß mittels dem erfindungsgemäßen Verfahren die Rasterpunkte 10 bzw. Näpfchen unter der Prämisse des bestmöglichen Farbaufnahmeverhaltens und des bestmöglichen Farbwiedergabeverhaltens unterschiedliche Querschnitte aufweisen können bzw. diese auf unterschiedliche Weise mittels Laserlicht hergestellt werden können. Hinzu kommt noch, daß bspw. für die Halbtöne spezielle Querschnittsformen gewählt werden können. Ein Vollton (Schwarz) wird bspw. durch das fertig gravierte Näpfchen 100 erzeugt, wohingegen Halbtöne bspw. durch einen Rasterpunkt bzw. ein Näpfchen 102 erzeugt werden können, die bspw. eine zentrale Erhöhung aufweisen, s. Näpfchen 102. Die Näpfchenform in Form einer Kalotte 101 ist, wenn die geometrische Tiefe des Näpfchens bzw. des Rasterpunktes 10 gering ist, gut dazu geeignet, eine gute Flächendeckung beim Druck zu erreichen. Es sei darauf hingewiesen, daß die Darstellung der geometrischen Tiefe des Rasterpunktes 10 in Fig. 9 hier stark übertrieben ist, um die unterschiedlichen Querschnittsformen der Rasterpunkte 10 bzw. Näpfchen deutlich darstellen zu können.

Aus den Fig. 8 und 10 ist ersichtlich, daß ein einzelner Rasterpunkt 10 bzw. ein fertiger Rasterpunkt 100, vgl. nochmals auch Fig. 9, aus einer Mehrzahl von einzelnen Rasterpunkten 10 bzw. Teilrasterpunkten gebildet werden kann.

In den Fig. 8 und 10 ist angedeutet, daß das Laserlicht 18, das entsprechend der Bebilderungsinformationen gesteuert wird, pro Rasterpunkt 10 auf die Oberfläche der Druckform 14 gerichtet wird und in Abhängigkeit der Zeit des Einwirkens des Laserlichts und in Abhängigkeit der Energie, mit der der Laserstrahl 18 auf die Oberfläche 17 der Druckform 14 einwirkt, unterschiedlich große Rasterpunkte 10 im Hinblick auf die Öffnungsweite und die geometrische Tiefe des Rasterpunktes 10 im Werkstoff der Druckform 14 erzeugt. Es kann somit eine beliebig große Öffnung des Rasterpunktes 10 bzw. eine beliebige geometrische Tiefe des Rasterpunktes 10 erreicht werden, wobei die Einhüllende 19 letztlich die Form des fertigen Näpfchens 100 bestimmt, vgl. nochmals Fig. 9.

Jeweils benachbarte Rasterzellen 11 aber auch jeweilige benachbarte Rasterpunkte 10 selbst bilden zwischen sich einen Steg 22, der bei einer Bebilderung einer Druckform 14 für den Tiefdruck von außerordentlicher Wichtigkeit für eine scharfe Konturierung des fertigen Druckproduktes und auch für das Farbverhalten der einzelnen Farben beim Mehrfarbendruck ist. Mittels dem erfindungsgemäßen Verfahren, vgl. Fig. 10, kann durch geeignete Steuerung der Energie des Laserlichts 18, was auch eine geeignete andere Fokussierung des Laserlichts 18 einschließen kann, eine hochpräzise Einstellung beider nebeneinander liegender Rasterpunkte 10 erreicht werden. So ist die Ausbildung eines schmalen Stegs 20, gestrichelte Linie, durch Laserlicht hoher Energiedichte möglich, speziell der beiden Randrasterpunkte 10, wohingegen ein breiter Steg 21, durchgezogene Linie, mit geringer Energiedichte des Laserlichts 18 zur Ausbildung der beiden benachbarten Rasterpunkte 10 erzeugt werden kann.

### Bezugszeichenliste

- 10: Rasterpunkt / Näpfchen / Teilnäpfchen
- 100: fertiges Näpfchen
- 101: Kalotte
- 102: Näpfchen mit zentraler Erhebung
- 11: Rasterzelle
- 12: Raster
- 120: Raster
- 13: Dreh- bzw. Linearbewegungsrichtung der Druckform
- 14: Druckform
- 15: Drehachse einer Druckform
- 16: Pfeil (Drehrichtung des Rasters)
- 17: Oberfläche der Druckform
- 18: Laserlicht (Laserstrahl)
- 19: Einhüllende
- 20: schmaler Steg
- 21: breiter Steg
- 22: Steg
- α: Winkel (zwischen Dreh- bzw. Linearbewegungsrichtung und Rasterrichtung)
- β: Winkel (zwischen Dreh- bzw. Bezugsachse einer Druck- form)

## Patentansprüche

1. Verfahren zum Gravieren einer Druckform, insbesondere zum Gravieren einer Druckform für den Tiefdruck, wobei die auf der Druckform in einem vorgegebenen Raster zu gravierenden Farbaufnahme- und Farbabgabe-Näpfchen, die in ihrer Gesamtheit den pro Druckform vorgegebenen Bebilderungsinformationen entsprechen, mittels Laserlicht erzeugt werden, und wobei das Raster in einem spitzen winkel α relativ zur Dreh- oder Linearbewegung der Druckform bei der Erzeugung von Rasterpunkten geneigt ist und durch eine Mehrzahl von Rasterpunkten eine Rasterzelle gebildet wird, und wobei in den Rasterzellen jeweils eine Mehrzahl von Rasternäpfchen vorhanden ist.

2. Verfahren nach Anspruch 1, **dadurch gekennzeichnet, daß** der Rasterwinkel α in Abhängigkeit der Bebilderungsinformationen wählbar ist.

3. Verfahren nach einem der Ansprüche 1 oder 2, **dadurch gekennzeichnet, daß** die Form des Rasters in Abhängigkeit der Bebilderungsinformationen wählbar ist.

4. Verfahren nach Anspruch 3, **dadurch gekennzeichnet, daß** die Form des Rasters ein Quadrat und/oder ein Rechteck ist.

5. Verfahren nach Anspruch 3, **dadurch gekennzeichnet, daß** die Form des Rasters ein Sechseck ist.

6. Verfahren nach Anspruch 3, **dadurch gekennzeichnet, daß** die Form des Rasters eine Linie ist.

7. Verfahren nach einem der Ansprüche 1 bis 6, **dadurch gekennzeichnet, daß** die Rasterpunkte bei einem Bebilderungsvorgang einer Druckform auf vorbestimmten Flächen der Druckform wenigstens teilweise nach der Methode der AM-Rasterung und auf anderen vorbestimmten Flächen der Druckform wenigstens teilweise nach der Methode der FM-Rasterung ausgeführt wird.

8. Verfahren nach Anspruch 7, **dadurch gekennzeichnet, daß** bei einem Bebilderungsvorgang einer Druckform wenigstens eine vorbestimmte Fläche der Druckform sowohl nach der Methode der AM-Rasterung als auch nach der Methode der FM-Rasterung bebildert wird.

9. Verfahren nach einem der Ansprüche 7 oder 8, **dadurch gekennzeichnet, daß** ein Vollton eines Rasterpunktes mit einem Tonwert von 100 bis 80 % mittels der AM-Rasterung bebildert wird.

10. Verfahren nach einem der Ansprüche 7 oder 8, **dadurch gekennzeichnet, daß** ein Ton eines Rasterpunktes mit einem Tonwert von 80 bis 40 % sowohl mittels AM-Rasterung als auch mittels FM-Rasterung bebildert wird.

11. Verfahren nach einem der Ansprüche 7 oder 8, **dadurch gekennzeichnet, daß** ein Ton eines Rasterpunktes mit einem Tonwert von 40 bis 0 % mittels der FM-Rasterung bebildert wird.

12. Verfahren nach einem der Ansprüche 1 bis 11, **dadurch gekennzeichnet, daß** in einer Rasterzelle eine Mehrzahl unterschiedlich großer Rasterpunkte beim Bebilderungsvorgang ausgebildet werden.

13. Verfahren nach Anspruch 12, **dadurch gekennzeichnet, daß** die zu den Rändern der Rasterzelle hin gelegenen Rasterpunkte kleiner als die zur Mitte der Rasterzelle hin gelegenen Rasterpunkte ausgebildet sind.

14. Verfahren nach einem der Ansprüche 1 bis 13, **dadurch gekennzeichnet, daß** die Bebilderung der Druckform zur Ausbildung der Rasterpunkte der Rasterzellen mit gleicher Energie des Laserlichts pro Rasterpunkt oder Teilrasterpunkt ausgeführt wird.

15. Verfahren nach einem der Ansprüche 1 bis 14, **dadurch gekennzeichnet, daß** die Bebilderung der Druckform zur Ausbildung der Rasterpunkte der Rasterzellen mit unterschiedlicher Energie des Laserlichts pro Rasterpunkt oder Teilrasterpunkt ausgeführt wird.

16. Verfahren nach Anspruch 15, **dadurch gekennzeichnet, daß** die Rasterpunkte oder Teilrasterpunkte zu den Rändern der Rasterzellen hin mit geringerer Energie des Laserlichts erzeugt werden als die zum Zentrum der Rasterzellen hin erzeugten Rasterpunkte oder Teilrasterpunkte.

17. Verfahren nach einem der Ansprüche 1 bis 16, **dadurch gekennzeichnet, daß** ein Rasterpunkt oder ein Teilrasterpunkt mittels einer Mehrzahl von jeweiligen Laserlichtbeaufschlagungszeitintervallen erzeugt wird.

18. Verfahren nach Anspruch 17, **dadurch gekennzeichnet, daß** die Laserlichtbeaufschlagungszeitintervalle einstellbar und vorwählbar sind.

19. Verfahren nach einem der Ansprüche 17 oder 18, **dadurch gekennzeichnet, daß** die Laserlichtenergie einstellbar und vorwählbar ist.

20. Verfahren nach einem der Ansprüche 17 bis 19, **dadurch gekennzeichnet, daß** ein Rasterpunkt oder ein Teilrasterpunkt zunächst mittels einer geringen Energie des Laserlichts erzeugt wird, daß der gebildete Rasterpunkt oder der gebildete Teilrasterpunkt nachfolgend mit einer maximalen Energie des Laserlichts beaufschlagt wird, und daß nachfolgend der gebildete Rasterpunkt oder gebildete Teilrasterpunkt wiederum mit geringer Energie des Laserlichts beaufschlagt wird.

## Claims

1. Method for engraving a printing plate, in particular a printing plate for gravure printing, in which the depressions for colour uptake and colour transfer to be engraved on the plate in a predetermined raster grid, which depressions together form the predetermined imaging information for each plate, are created by means of laser light, and in which the raster is inclined during the formation of the halftone dots at an acute angle α relative to the rotary or linear motion of the plate and a raster cell is formed by a plurality of halftone dots, and in which there is a plurality of raster depressions in each of the raster cells.

2. Method according to claim 1, **characterised in that** the raster angle α can be selected as a function of the imaging information.

3. Method according to one of claims 1 or 2, **characterised in that** the shape of the raster can be selected as a function of the imaging information.

4. Method according to claim 3, **characterised in that** the shape of the raster is a square and/or a rectangle.

5. Method according to claim 3, **characterised in that** the shape of the raster is a hexagon.

6. Method according to claim 3, **characterised in that** the shape of the raster is a line.

7. Method according to one of claims 1 to 6, **characterised in that**, during an imaging process on a printing plate, the halftone dots are produced on predetermined areas of the plate at least in part using the AM rastering process and on other predetermined areas of the plate at least in part using the FM rastering process.

8. Method according to claim 7, **characterised in that**, during an imaging process on a printing plate, at least one predetermined area of the plate is imaged using both the AM rastering process and the FM rastering process.

9. Method according to one of claims 7 or 8, **characterised in that** a full tone of a halftone dot is imaged at a tone value of 100 to 80 % by means of AM rastering.

10. Method according to one of claims 7 or 8, **characterised in that** a tone of a halftone dot with a tone value of 80 to 40 % is imaged by means of both AM rastering and FM rastering.

11. Method according to one of claims 7 or 8, **characterised in that** a tone of a halftone dot with a tone value of 40 to 0 % is imaged by means of FM rastering.

12. Method according to one of claims 1 to 11, **characterised in that**, within a raster cell, a plurality of halftone dots of varying sizes is formed during the imaging process.

13. Method according to claim 12, **characterised in that** the halftone dots located towards the edges of the raster cell are made smaller than the halftone dots located towards the centre of the raster cell.

14. Method according to one of claims 1 to 13, **characterised in that** the imaging of the printing plate to form the halftone dots of the raster cells is carried out using the same laser light energy for each halftone dot or part halftone dot.

15. Method according to one of claims 1 to 14, **characterised in that** the imaging of the printing plate to form the halftone dots of the raster cells is carried out using different levels of laser light energy for each halftone dot or part halftone dot.

16. Method according to claim 15, **characterised in that** the halftone dots or part halftone dots towards the edges of the raster cells are created using a lower energy level of the laser light than the halftone dots or part halftone dots towards the centre of the raster cells.

17. Method according to one of claims 1 to 16, **characterised in that** one halftone dot or part halftone dot is created by means of a plurality of laser light impact intervals.

18. Method according to claim 17, **characterised in that** the laser light impact intervals are adjustable and pre-selectable.

19. Method according to one of claims 17 or 18, **characterised in that** the laser light energy is adjustable and pre-selectable.

20. Method according to one of claims 17 to 19, **characterised in that** a halftone dot or part halftone dot is initially created by means of a low laser light energy level, that the halftone dot or part halftone dot formed is then impacted with the maximum laser light energy level, and that the halftone dot or part halftone dot formed is then again impacted with a low laser light energy level.

## Revendications

1. Procédé destiné à graver une forme d'impression, en particulier à graver une forme d'impression pour l'impression en héliogravure, dans lequel les alvéoles de captation d'encre et de restitution d'encre, à graver sur la forme d'impression selon une trame prédéterminée, correspondant dans leur totalité aux informations prédéterminées de formation d'image par forme d'impression, sont générées à l'aide d'une lumière laser, et la trame étant inclinée sous un angle α aigu par rapport au déplacement en rotation ou linéaire de la forme d'impression lors de la génération des points de trame et une cellule tramée étant formée par une pluralité de points de trame, et dans lequel, chaque fois, une pluralité d'alvéoles de trame étant réalisées dans les cellules de trame.

2. Procédé selon la revendication 1, **caractérisé en ce que** l'angle de trame α est susceptible d'être choisi en fonction des informations de formation d'image.

3. Procédé selon l'une des revendications 1 ou 2, **caractérisé en ce que** la forme de la trame est susceptible d'être choisie en fonction des informations de formation d'image.

4. Procédé selon la revendication 3, **caractérisé en ce que** la forme de la trame est un carré ou un rectangle.

5. Procédé selon la revendication 3, **caractérisé en ce que** la forme de la trame est un hexagone.

6. Procédé selon la revendication 3, **caractérisé en ce que** la forme de la trame est une ligne.

7. Procédé selon l'une des revendications 1 à 6, **caractérisé en ce que**, lors d'un processus de formation d'image sur une forme d'impression, les points de trame sont réalisés, sur des surfaces prédéterminées de la forme d'impression, au moins partiellement selon la méthode du tramage AM et, sur d'autres surfaces prédéterminées de la forme d'impression, au moins partiellement selon la méthode du tramage FM.

8. Procédé selon la revendication 7, **caractérisé en ce que**, lors d'un processus de formation d'image sur une forme d'impression, au moins une surface prédéterminée de la forme d'impression est munie de l'image tant selon la méthode de tramage AM qu'également selon la méthode de tramage FM.

9. Procédé selon l'une des revendications 7 ou 8, **caractérisé en ce qu'**une teinte homogène d'un point de trame est obtenue avec une valeur de ton de 100 à 80 % au moyen du tramage AM.

10. Procédé selon l'une des revendications 7 ou 8, **caractérisé en ce qu'**une teinte d'un point de trame ayant une valeur de ton de 80 à 40 % est obtenue tant au moyen d'un tramage AM qu'également au moyen d'un tramage FM.

11. Procédé selon l'une des revendications 7 ou 8, **caractérisé en ce qu'**une teinte d'un point de trame ayant une valeur de ton de 40 à 0 % est obtenue au moyen du tramage FM.

12. Procédé selon l'une des revendications 1 à 11, **caractérisé en ce que**, dans une cellule de trame, une pluralité de points de trame de grosseur différente sont réalisés lors du processus de formation d'image.

13. Procédé selon la revendication 12, **caractérisé en ce que** les points de trame situés aux bords de la cellule de trame sont plus petits quel les points de trame situés au centre de la cellule de trame.

14. Procédé selon l'une des revendications 1 à 13, **caractérisé en ce que** la formation d'image sur la forme d'impression pour réaliser les points de trame des cellules de trame est réalisée avec la même énergie de lumière laser par point de trame ou point de trame partiel.

15. Procédé selon l'une des revendications 1 à 14, **caractérisé en ce que** la formation de l'image sur la forme d'impression pour réaliser les points de trame des cellules de trame est réalisée avec une énergie différente de lumière laser par point de trame ou point de trame partiel.

16. Procédé selon la revendication 15, **caractérisé en ce que** les points de trame ou points de trame partiels aux bords des cellules de trame sont générés avec une plus faible énergie de lumière laser que les points de trame ou points de trame partiels générés au centre des cellules de trame.

17. Procédé selon l'une des revendications 1 à 16, **caractérisé en ce qu'**un point de trame ou un point de trame partiel est généré au moyen d'une pluralité d'intervalles de temps de sollicitation par une lumière laser.

18. Procédé selon la revendication 17, **caractérisé en ce que** les intervalles de temps de sollicitation par une lumière laser sont réglables et présélectionnables.

19. Procédé selon l'une des revendications 17 ou 18, **caractérisé en ce que** l'énergie de lumière laser est réglable et présélectionnable.

20. Procédé selon l'une des revendications 17 à 19, **caractérisé en ce qu'**un point de trame ou un point de trame partiel est généré d'abord au moyen d'une faible énergie de la lumière laser, **en ce que** le point de trame formé ou le point de trame partiel formé est ensuite sollicité avec une énergie maximale de la lumière laser, et **en ce que**, ensuite, le point de trame formé ou le point de trame partiel formé est de nouveau sollicité avec une faible énergie de la lumière laser.
